# EUROPEAN PATENT APPLICATION

(11) **EP 1 804 497 A2**
(43) Date of publication of application: **04.07.2007**
(21) Application number: 06255961.2
(22) Date of filing: 22.11.2006
(51) Int. Cl.: H04N 5/64

(54) **Disk unit-integrated display**

(30) Priority: 27.12.2005 JP 2005011013 U
(71) Applicant: Funai Electric Co., Ltd., Daito-shi, Osaka 574-0031 (JP)
(72) Inventor: Iwai, Takeo, Daito-shi Osaka 574-0013 (JP); Makino, Katsuhiko, Daito-shi Osaka 574-0013 (JP)
(74) Representative: Calderbank, Thomas Roger

(57) **Abstract**

A disk unit-integrated display capable of reducing a height of the disk unit-integrated display while inhibiting the number of components from increase and structure from complication, in a case of having a structure in which a rib portion for locating a position in a height direction is provided at a front side of a disk tray of a disk unit body is obtained. This disk unit-integrated display (1) includes a cathode ray tube (4) with a reinforcing band (4d) wound therearound, and a disk unit (7) having the disk tray (7a) and the disk unit body (7b), in which the disk unit body includes the rib portion (7f) provided at a front side of the disk tray and protruding upwardly, and the rib portion of the disk unit body is arranged at the rear of the reinforcing band located at a lower end of the cathode ray tube.

## Description

The present invention relates to a disk unit-integrated display, and more particularly, it relates to a disk unit-integrated display including a cathode ray tube.

A display integrated with a picture reproducer such as a disk unit is known in general. For example, Japanese Patent Laying-Open No. H8-46894 (1996) or Utility Model Registration No. 3106384 discloses a display unit in which a video tap recorder (VTR) as a picture reproducer is arranged below a CRT (cathode ray tube). Japanese Patent Laying-Open No. H6-78249 (1994) discloses a VTR-integrated television apparatus (picture reproducer-integrated display) in which a VTR is arranged in a space of a backside of a cathode ray tube. In the VTR-integrated television apparatus disclosed in the aforementioned Japanese Patent Laying-Open No. 6-78249 (1994), a cassette tape inserted through a VTR receiving portion is conveyed to a VTR mechanical body portion by conveying means. Japanese Patent Laying-Open No. 2002-135684 also discloses a DVD (digital versatile disk)-integrated television (disk unit-integrated display).

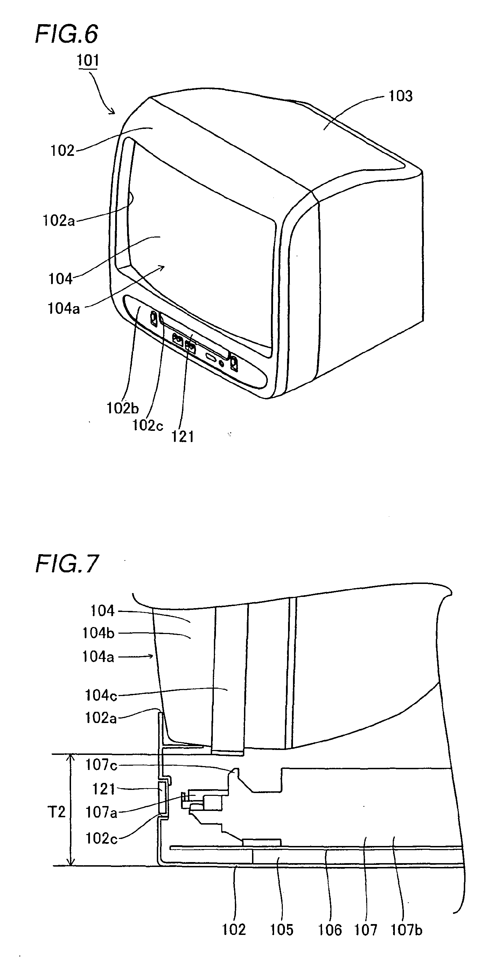

Fig. 6 is a perspective view showing an overall structure of a conventional DVD-integrated television 101. Fig.7 is a schematic diagram of the conventional DVD-integrated television 101 shown in Fig. 6. With reference to Figs. 6 and 7, a structure of the conventional DVD-integrated television 101 will be described.

The conventional DVD-integrated television 101 comprises a front cabinet (front side housing) 102 and a rear cabinet (rear side housing) 103 constituting an outer frame of the DVD-integrated television 101, a CRT 104 mounted on the front cabinet 102, a holder (holding member) 105, a wiring board 106, and a DVD drive unit (disk unit) 107 for driving a DVD (disk) (not shown), as shown in Figs. 6 and 7.

As shown in Figs. 6 and 7, the front cabinet 102 is provided with a display window 102a exposing a display region 104a of the CRT 104, an operating portion 102b in which various manual operation buttons such as a power supply are arranged, and an opening 102c for projecting an after-mentioned disk tray 107a of the DVD drive unit 107 outside the front cabinet 102. The opening 102c is mounted with a door member 121 that opens and closes in conjunction with projecting and housing of the disk tray 107a of the DVD drive unit 107. The rear cabinet 103 is mounted on the front cabinet 102 by tightening screws (not shown) with respect to the front cabinet 102.

The CRT 104 is mounted on the front cabinet 102 while the display region 104a is exposed from the display window 102a of the front cabinet 102, as shown in Figs. 6 and 7. The CRT 104 includes the display region 104a, a glass tube 104b forming a vacuum region, and an explosion-proof band (reinforcing band) 104c made of iron wound around the glass tube 104b, as shown in Fig. 7. The explosion-proof band 104c has a function of preventing implosion of the glass tube 104c in a vacuum state.

As shown in Fig. 7, the holder 105 is mounted with the wiring board 106 and the DVD drive unit 107. The holder 105 is held by the front cabinet 102 and the rear cabinet 103. The DVD drive unit 107 includes the disk tray 107a, a DVD drive unit body portion (disk unit body) 107b to which the disk tray 107a is mounted slidably in an anteroposterior direction. The disk tray 107a slides in the anteroposterior direction, whereby the disk tray 107a is projected outside the front cabinet 102 through the opening 102c of the front cabinet 102 and is housed inside the front cabinet 102. Thus, the disk tray 107a has a function of conveying a DVD (not shown) arranged therein. In the DVD drive unit body portion 107b, a pair of upwardly protruding rib portions 107c are formed on a front side of the disk tray 107a. The rib portions 107c of the DVD drive unit body portion 107b have a function as a portion for locating a position in a height direction with respect to the CRT 104 and is arranged directly below the explosion-proof band 104c.

In the conventional DVD-integrated television 101 shown in Fig. 7, however, the rib portions 107c of the DVD drive unit 107 is so arranged directly below the explosion-proof band 104c located in a lower end of the CRT 104 that it is difficult to reduce a distance T2 from a lower end of the explosion-proof band 104c to a bottom surface of the DVD-integrated television 101. Therefore, it is disadvantageously difficult to reduce a height of the DVD-integrated television 101.

In the picture reproducer integrated displays disclosed in the aforementioned Japanese Patent Laying-Open No. 8-46894 (1996), Utility Model Registration No. 3106384 and Japanese Patent Laying-Open No. 2002-135684, the structure in which the rib portions 107c as the portion for locating a position in the height direction with respect to the CRT 104 are provided on the front side of the disk tray 107a of the DVD drive unit body portion 107b is not disclosed, dissimilarly to the conventional DVD-integrated television 101 shown in Fig. 6 and 7. Accordingly, a problem of the present invention, that reduction in the height of the DVD-integrated television 101 is difficult due to the rib portions 107c as the portion for locating a position in the height direction, does not exist.

While the VTR-integrated television apparatus disclosed in the aforementioned Japanese Patent Laying-Open No. 6-78249 (1994) can reduce the height of the VTR-integrated television apparatus, it must be provided with the conveying means having a complicated structure including a transfer belt, a pair of pulleys and the like for conveying a cassette tape inserted through the VTR receiving portion to the VTR mechanical body portion, separately from a VTR, thereby posing a problem that the number of components is increased and the structure is complicated.

The present invention has been proposed in order to solve the aforementioned problem, and an object of the present invention is to provide a disk unit-integrated display capable of reducing a height of the disk unit-integrated display while inhibiting the number of components from increase and structure from complication, in a case of having a structure in which a rib portion for locating a position in a height direction is provided on a front side of a disk tray of a disk unit body.

In order to attain the aforementioned object, a disk unit-integrated display according to a first aspect of the present invention comprises a cathode ray tube with a reinforcing band wound therearound, and a disk unit including a disk tray for placing a disk, arranged below the cathode ray tube and movable in a horizontal direction, and a disk unit body rotating a disk placed on the disk tray, in which the disk unit body includes a rib portion which is provided on a front side of the disk tray, protrudes upwardly and functions as a portion for locating a position in a height direction with respect to the cathode ray tube, and the rib portion of the disk unit body is arranged at the rear of the reinforcing band located at a lower end of the cathode ray tube.

In the disk unit-integrated display according to the first aspect of the present invention, as hereinabove described, the rib portion of the disk unit body functioning as the portion for locating a position in the height direction with respect to the cathode ray tube is so formed as to be provided on the front side of the disk tray and to be arranged at the rear of the reinforcing band located at the lower end of the cathode ray tube. Thereby, an upper end of the rib portion of the disk unit body can be arranged at a height not less than a lower end of the reinforcing band of the cathode ray tube dissimilarly to a case where the rib portion of the disk unit body is arranged below the reinforcing band located at the lower end of the cathode ray tube, and the disk unit can be so arranged as to be further close to a cathode ray tube side (upper side). Thus, a distance from the reinforcing band located at the lower end of the cathode ray tube to a bottom surface of the disk unit-integrated display can be reduced, thereby enabling reduction in a height of the disk unit-integrated display. The disk unit is so formed that a disk is placed and the disk tray movable in a horizontal direction is included therein, whereby the disk is conveyed to the disk unit body by the disk tray. Thus, no conveying means having a complicated structure may be provided separately from the disk unit, in order to convey the disk to the disk unit body. Consequently, it is possible to reduce the height of the disk unit-integrated display while inhibiting the number of components from increase and structure from complication.

In the aforementioned disk unit-integrated display according to the first aspect, the upper end of the rib portion of the disk unit body is preferably arranged at a higher position than the lower end of the reinforcing band. According to this structure, the disk unit is so arranged as to be further close to the cathode ray tube side, whereby the distance from the reinforcing band located at the lower end of the cathode ray tube to the bottom surface of the disk unit-integrated display can be reduced.

The aforementioned disk unit-integrated display according to the first aspect preferably further comprises a front side housing mounted with the cathode ray tube, a rear side housing mounted with the front side housing, and a holding member supporting the disk unit, in which the front side housing and the rear side housing are preferably respectively formed with rail portions, the holding member is preferably formed to have rail engaging portions respectively engaged with the rail portions of the front side housing and the rear side housing, and the rear side housing is preferably mounted on the front side housing in a state that the rail engaging portions of the holding member are respectively engaged with the rail portions of the front side housing and the rear side housing. Thereby, the rib portion of the disk unit supported by the holding member is arranged at the rear of the reinforcing band located at the lower end of the cathode ray tube. According to this structure, the rib portion of the disk unit supported by the holding member can be easily arranged at the rear of the reinforcing band located at the lower end of the cathode ray tube by using the rail portions and the rail engaging portions.

In the aforementioned structure including the front side housing and the rear side housing, the rail portions of the front side housing and the rear side housing are preferably formed on bottom surfaces of the front side housing and the rear side housing. According to this structure, a height from the bottom surfaces of the front side housing and the rear side housing to the holding member can be reduced, whereby the height of the disk unit-integrated display can be reduced.

In the aforementioned structure including the front side housing, the reinforcing band is preferably made of metal, and is preferably integrally formed with a mounting portion for mounting the cathode ray tube on the front side housing. According to this structure, the cathode ray tube can be easily mounted on the front side housing.

In the aforementioned disk unit-integrated display according to the first aspect, the disk tray of the disk unit may be arranged at a region corresponding to the reinforcing band below the reinforcing band.

In this case, the disk tray of the disk unit is preferably arranged at a lower position than the rib portion of the disk unit. According to this structure, the disk tray can be easily arranged below the reinforcing band wound around the cathode ray tube.

The aforementioned structure in which the disk tray is arranged at the lower position than the rib portion preferably further comprises a front side housing mounted with the cathode ray tube, in which the front side housing is preferably formed with an opening at a corresponding region in front of the disk tray. According to this structure, the disk tray is moved in the horizontal direction, whereby the disk tray can be easily exposed outside the front side housing through the opening.

The aforementioned disk unit-integrated display according to the first aspect may further comprise a cover member mounted on an upper surface of the disk unit body and a wiring board mounted on an upper surface of the cover member, in which the wiring board may be arranged at a higher position than the rib portion of the disk unit body and at the rear of the rib portion.

In the aforementioned disk unit-integrated display according to the first aspect, two of the rib portions of the disk unit body are preferably respectively provided in the vicinity of both side ends of the disk tray. According to this structure, it is possible to perform locating of the disk unit in a height direction with respect to the cathode ray tube by the two rib portions at two places in the vicinity of the both side ends of the disk tray, whereby the locating of the disk unit in the height direction with respect to the cathode ray tube can be accurately performed.

A disk unit-integrated display according to a second aspect of the present invention comprises a cathode ray tube with a reinforcing band wound therearound, a disk unit including a disk tray for placing a disk, arranged below the cathode ray tube and movable in a horizontal direction, and a disk unit body rotating a disk placed on the disk tray, a front side housing mounted with the cathode ray tube, a rear side housing mounted with the front side housing, and a holding member for supporting the disk unit, in which the disk unit body includes a rib portion which is provided on a front side of the disk tray, protrudes upwardly, and functions as a portion for locating a position in a height direction with respect to the cathode ray tube, the front side housing and the rear side housing are respectively formed with rail portions on bottom surfaces thereof, the holding member is formed to have rail engaging portions respectively engaged with the rail portions of the front side housing and the rear side housing, the rear side housing is mounted on the front side housing in a state that the rail engaging portion of the holding member are respectively engaged with the rail portions of the front side housing and the rear side housing so that the rib portion of the disk unit supported by the holding member is arranged at the rear of the reinforcing band located at a lower end of the cathode ray tube, an upper end of the rib portion of the disk unit body is arranged at a higher position than an lower end of the reinforcing band, and the reinforcing band is made of metal and is integrally formed with a mounting portion for mounting the cathode ray tube on the front side housing.

In the disk unit-integrated display according to the second aspect of the present invention, as hereinabove described, the rib portion of the disk unit body functioning as the portion for locating a position in the height direction with respect to the cathode ray tube is so formed as to be provided on the front side of the disk tray and to be arranged at the rear of the reinforcing band located at the lower end of the cathode ray tube. Thereby, the upper end of the rib portion of the disk unit body can be arranged at a height not less than the lower end of the reinforcing band of the cathode ray tube dissimilarly to a case where the rib portion of the disk unit body is arranged below the reinforcing band located at the lower end of the cathode ray tube, and the disk unit can be so arranged as to be further close to a cathode ray tube side (upper side). Thus, the distance from the reinforcing band located at the lower end of the cathode ray tube to a bottom surface of the disk unit-integrated display can be reduced, thereby enabling reduction in a height of the disk unit-integrated display. The disk unit is so formed that a disk is placed and the disk tray movable in a horizontal direction is included therein, whereby the disk is conveyed to the disk unit body by the disk tray. Thus, no conveying means having a complicated structure may be provided separately from the disk unit, in order to convey the disk to the disk unit body. Consequently, it is possible to reduce the height of the disk unit-integrated display while inhibiting the number of components from increase and structure from complication. When the upper end of the rib portion of the disk unit body is arranged at a higher position than the lower end of the reinforcing band, the disk unit is so arranged as to be further close to the cathode ray tube side, thereby enabling reduction in the distance from the reinforcing band located at the lower end of the cathode ray tube to the bottom surface of the disk unit-integrated display. Further, the front side housing and the rear side housing are formed with the rail portions respectively, the holding member is formed to have the rail engaging portions respectively engaged with rail portions of the front side housing and the rear side housing, and the rear side housing is mounted on the front side housing in a state that the rail engaging portions of the holding member are respectively engaged with the rail portions of the front side housing and the rear side housing. Thereby the rib portion of the disk unit supported by the holding member is so formed as to be arranged at the rear of the reinforcing band located at the lower end of the cathode ray tube. Thus, the rib portion of the disk unit supported by the holding member can be easily arranged at the rear of the reinforcing band located at the lower end of the cathode ray tube by using the rail portions and the rail engaging portions. In addition, the rail portions of the front side housing and the rear side housing are formed on the bottom surfaces of the front side housing and the rear side housing, whereby a height from the bottom surfaces of the front side housing and the rear side housing to the holding member can be reduced. Thus, the height of the disk unit-integrated display can be reduced. The reinforcing band is made of metal and is integrally formed with a mounting portion for mounting the cathode ray tube to the front side housing, thereby the cathode ray tube can be easily mounted on the front side housing.

In the disk unit-integrated display according to the second aspect, the disk tray of the disk unit may be arranged at a region corresponding to the reinforcing band below the reinforcing band.

In this case, the disk tray of the disk unit is preferably arranged at a lower position than the rib portion of the disk unit. According to this structure, the disk tray can be easily arranged below the reinforcing band wound around the cathode ray tube.

In the aforementioned structure in which the disk tray is arranged at the lower position than the rib portion of the disk tray, the front side housing is preferably formed with an opening at a corresponding region in front of the disk tray. According to this structure, the disk tray is moved in the horizontal direction, whereby the disk tray can be easily exposed outside the front side housing through the opening.

The disk unit-integrated display according to the second aspect further comprises a cover member mounted on an upper surface of the disk unit body, and a wiring board mounted on an upper surface of the cover member, in which the wiring board is arranged at a higher position than the rib portion of the disk unit body and at the rear of the rib portion.

In the aforementioned disk unit-integrated display according to the second aspect, two of the rib portions of the disk unit body are preferably respectively provided in the vicinity of both side ends of the disk tray. According to this structure, it is possible to perform locating of the disk unit in a height direction with respect to the cathode ray tube by the two rib portions at two places in the vicinity of the both side ends of the disk tray, whereby the locating of the disk unit in the height direction with respect to the cathode ray tube can be accurately performed.

The foregoing and other objects, features, aspects and advantages of the present invention will become more apparent from the following detailed description of the present invention when taken in conjunction with the accompanying drawings.
In the drawings:
Fig. 1 is a perspective view showing an overall structure of a DVD-integrated television according to an embodiment of the present invention;
Fig. 2 is an exploded perspective view of the DVD-integrated television according to the embodiment shown in Fig. 1;
Fig. 3 is a perspective view showing a DVD drive unit of the DVD-integrated television which is mounted on a holder according to the embodiment shown in Fig. 1;
Fig. 4 is a front view showing the DVD-integrated television from which a rear cabinet is removed according to the embodiment shown in Fig. 1,;
Fig. 5 is a schematic diagram of the DVD-integrated television according to the embodiment shown in Fig. 1;
Fig. 6 is a perspective view showing an overall structure of a conventional DVD-integrated television; and
Fig. 7 is a schematic diagram of the conventional DVD-integrated television shown in Fig. 6.

An embodiment of the present invention will be hereinafter described with respect to the drawings.

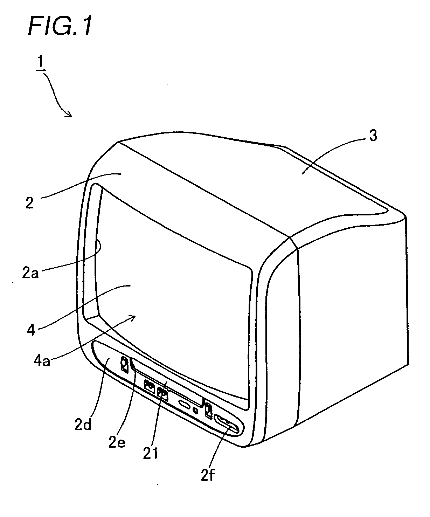

A structure of a DVD-integrated television 1 according to the embodiment of the present invention will be described with reference to Figs. 1 to 5. The embodiment of the present invention is applied to the DVD-integrated television, which is an exemplary disk unit-integrated display.

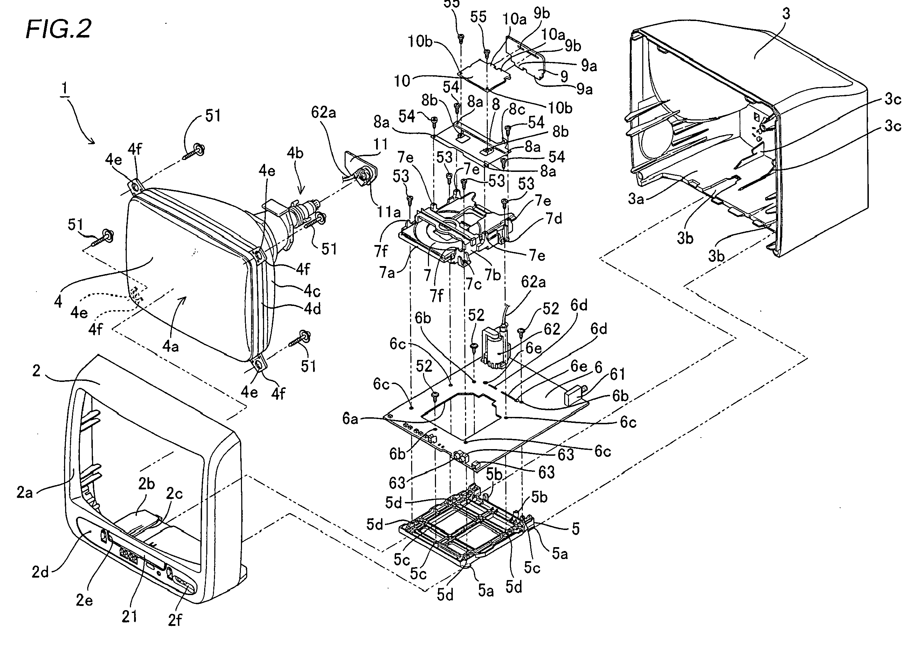

As shown in Figs. 1 and 2, the DVD-integrated television 1 according to the embodiment of the present invention comprises a front cabinet 2 and a rear cabinet 3 constituting an outer frame of the DVD-integrated television 1, a CRT (cathode ray tube) 4 mounted on the front cabinet 2, a holder 5 made of resin, a main wiring board 6 for controlling a television, a DVD drive unit 7 for driving a DVD (digital versatile disk) (not shown), a shield member 8, a relay board 9, a DVD wiring board 10 for controlling the DVD drive unit 7, and a CRT wiring board 11 for controlling the CRT 4. The front cabinet 2 and the rear cabinet 3 are examples of the "front side housing" and the "rear side housing" in the present invention respectively. The holder 5 is an example of the "holding member" in the present invention, and the DVD drive unit 7 is an example of the "disk unit" in the present invention. The shield member 8 is an example of the "cover member" in the present invention, and the DVD wiring board 10 is an example of the "wiring board" in the present invention.

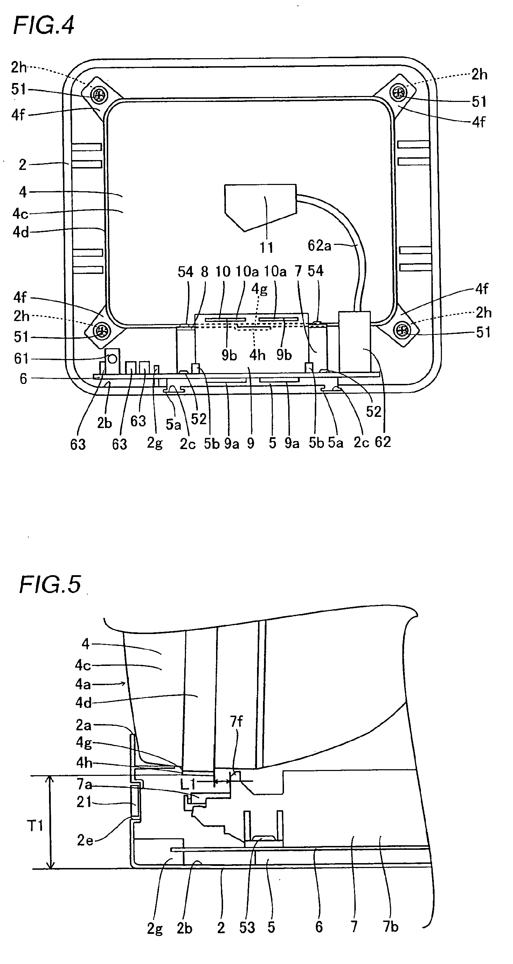

As shown in Figs. 1, 2 and 4, the front cabinet 2 is provided with a display window 2a exposing a display region 4a of the CRT 4, a bottom surface 2b, a pair of rail portions 2c formed on the bottom surface 2b, an operating portion 2d in which various manual operation buttons such as a power supply are arranged, an opening 2e for projecting an after-mentioned disk tray 7a of the DVD drive unit 7 outside the front cabinet 2, terminal receiving holes 2f in which after-mentioned terminal connecting portions 63 of the main wiring board 6 are arranged, holding rib portions 2g for holding the main wiring board 6 (see Fig. 4), and screw mounting holes 2h for mounting the CRT 4 (see Fig. 4). The opening 2e is formed in a corresponding region in front of the disk tray 7a, as shown in Fig. 5. The opening 2e of the front cabinet 2 is mounted with a door member 21 that opens and closes in conjunction with projecting and housing of the disk tray 7a of the DVD drive unit 7, as shown in Figs. 1 and 2.

The rear cabinet 3 is provided with a bottom surface 3a, a pair of rail portions 3b formed on the bottom surface 3a, holding rib portions 3c for holding the main wiring board 6, as shown in Fig. 2. The rear cabinet 3 is mounted on the front cabinet 2 by tightening screws (not shown) with respect to the front cabinet 2.

The CRT 4 is mounted on the front cabinet 2 while the display region 4a is exposed from the display window 2a of the front cabinet 2, as shown in Figs. 1, 2 and 4. The CRT 4 includes the display region 4a, an electron gun 4b emitting an electron beam, and a substantially square pyramid-shaped glass tube 4c forming a vacuum region, and an explosion-proof band 4d made of iron wound around the glass tube 4c. The explosion-proof band 4d of the CRT 4 is formed in a belt-shape and is wound around the glass tube 4c in the vicinity of the display region 4a, and thus has a function of preventing implosion of the glass tube 4c in a vacuum state. Four corners of the explosion-proof band 4d wound around the glass tube 4c are formed with screw mounting portions 4f formed with screw receiving holes 4e for mounting the CRT 4 on the front cabinet 2 respectively.

Screws 51 are fitted in the screw mounting holes 2h (see Fig. 4) of the front cabinet 2 through the screw receiving holes 4e of the screw mounting portions 4f respectively, whereby the CRT 4 is mounted on the front cabinet 2. A first end 4g and a second end 4h of the belt-shaped explosion-proof band 4d overlap with each other in the vicinity of a central portion of an lower end of the glass tube 4c. The explosion-proof band 4d is an example of the "reinforcing band" in the present invention, and the screw mounting portions 4f are examples of the "mounting portion" in the present invention.

As shown in Fig. 2, the holder 5 made of resin includes four rail engaging portions 5a engaged with the pair of rail portions 2c of the front cabinet 2 and the pair of rail portions 3b of the rear cabinet 3, guide portions 5b guiding the relay board 9 in a vertical direction, screw mounting holes 5c for mounting the main wiring board 6, and screw mounting holes 5d for mounting the DVD drive unit 7. The rail engaging portions 5a of the holder 5 are engaged with the rail portions 2c of the front cabinet 2 and the rail portions 3b of the rear cabinet 3 when the front cabinet 2 and the rear cabinet 3 are assembled, whereby the holder 5 is so formed as to be mounted on the front cabinet 2 and the rear cabinet 3. The main wiring board 6 is so formed as to be held by the holding rib portions 2g of the front cabinet 2 and the holding rib portions 3c of the rear cabinet 3 when the rear cabinet 3 is mounted on the front cabinet 2.

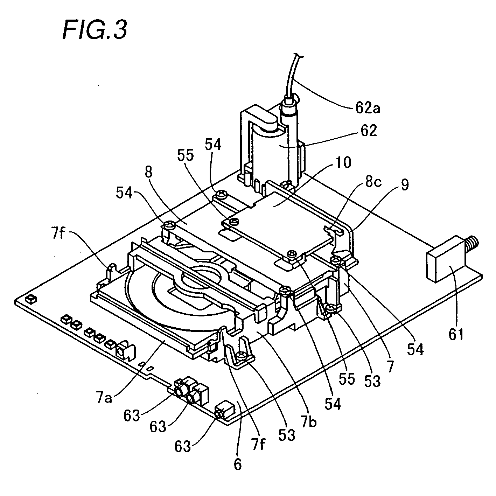

As shown in Figs. 2 and 3, the main wiring board 6 for controlling the television includes an opening 6a, screw receiving holes 6b for mounting the main wiring board 6 on the holder 5, screw receiving holes 6c for mounting the DVD drive unit 7 on the holder 5, terminal connection holes 6d each receiving an after-mentioned terminal 9a of the relay board 9, guide portion receiving holes 6e each receiving the guide portion 5b of the holder 5. The main wiring board 6 is mounted with an antenna receiving portion 61 for receiving an antenna wire, a fly back transformer 62 supplying a high voltage to the CRT 4, and the terminal connecting portions 63 used when connecting to other equipment. Screws 52 are fitted in the screw mounting holes 5c of the holder 5 through the screw receiving holes 6b respectively, whereby the main wiring board 6 is mounted on the holder 5.

As shown in Figs. 2 and 3, the DVD drive unit 7 includes the disk tray 7a, and the DVD drive unit body portion 7b in which the disk tray 7a is mounted slidably in an anteroposterior direction. The disk tray 7a slides in the anteroposterior direction, whereby the disk tray 7a is projected outside the front cabinet 2 through the opening 2e of the front cabinet 2 and is housed inside the front cabinet 2. Thus, the disk tray 7a has a function of conveying the DVD (not shown) arranged therein. The DVD drive unit body portion 7b is formed with screw receiving holes 7c and screw receiving cutouts 7d formed in portions corresponding to the screw mounting holes 5d of the holder 5 respectively, screw mounting holes 7e for mounting the shield member 8, a pair of upwardly protruding rib portions 7f formed on a front side of the disk tray 7a. The rib portions 7f function as a portion for locating a position in a height direction with respect to the CRT 4. The two rib portions 7f are respectively formed in the vicinity of side ends of the disk tray 7a at a higher position than the disk tray 7a. Each of screws 53 is fitted in the screw mounting hole 5d of the holder 5 through the screw receiving hole 7c or the screw receiving cutout 7d and the screw receiving hole 6c of the main wiring board 6, whereby the DVD drive unit 7 is mounted on the holder 5. The DVD drive unit 7 is so formed that a pickup drive portion (not shown) of the DVD drive unit body portion 7b is arranged in the opening 6a of the main wiring board 6 at the time of driving of the DVD drive unit 7. The DVD drive unit body portion 7b is an example of the "disk unit body" in the present invention.

According to this embodiment, the rib portions 7f formed on a front side of the disk tray 7a of the DVD drive unit body portion 7b are arranged at the rear of the explosion-proof band 4d of the CRT 4 by a distance L1, as shown in Fig. 5. Upper ends of the rib portions 7f of the DVD drive unit body portion 7b are arranged at a higher position than a lower end of the explosion-proof band 4d of the CRT 4.

As shown in Figs. 2 and 3, the shield member 8 includes screw receiving holes 8a for mounting the shield member 8 on the DVD drive unit 7, screw mounting holes 8b for mounting the DVD wiring board 10 on the shield member 8, and a rib holding portion 8c for holding the DVD wiring board 10. Screws 54 are fitted in the screw mounting holes 7e of the DVD drive unit 7 through the screw receiving holes 8a respectively, whereby the shield member 8 is mounted on an upper surface of the DVD drive unit 7.

As shown in Figs. 2 to 4, the relay board 9 includes the terminals 9a, and the terminal connection holes 9b each receiving an after-mentioned terminal 10a of the DVD wiring board 10. Each of the terminals 9a of the relay board 9 is soldered in a state of being inserted into the terminal connection hole 6d of the main wiring board 6, whereby the relay board 9 and the main wiring board 6 are electrically connected to each other. Each of lower ends of both side surfaces in a longitudinal direction of the relay board 9 is guided by the guide portion 5b of the holder 5 arranged in the guide portion receiving hole 6e of the main wiring board 6, whereby the relay board 9 is so mounted on the main wiring board 6 as to extend in a vertical direction.

As shown in Figs. 2 to 4, the DVD wiring board 10 for controlling the DVD drive unit 7 includes terminals 10a, screw receiving holes 10b for mounting the shield member 8 on the DVD wiring board. Each of the terminals 10a of the DVD wiring board 10 is soldered in a state of being inserted into the terminal connection hole 9b of the relay board 9, whereby the DVD wiring board 10 and the relay board 9 are electrically connected to each other. Screws 55 are fitted in the screw mounting holes 8b of the shield member 8 through the screw receiving holes 10b respectively, whereby the DVD wiring board 10 is mounted on an upper surface of the shield member 8. The holding rib portion 8c of the shield member 8 holds the vicinity of an end of one side surface in a longitudinal direction of the DVD wiring board 10.

As shown in Figs. 2 and 4, the CRT wiring board 11 for controlling the CRT 4 is mounted with a mounting portion 11a connected on the CRT 4. The CRT wiring board 11 is connected to the fly back transformer 62 mounted on the main wiring board 6 via a cable 62a.

According to this embodiment, as hereinabove described, the rib portions 7f of the DVD drive unit body portion 7b, which function as the portion for locating a position in the height direction with respect to the CRT 4, are so formed as to be provided on the front side of the disk tray 7a and to be arranged at the rear of the explosion-proof band 4d, which is located at the lower end of the CRT 4, by the distance L1. Thus, the upper ends of the rib portions 7f of the DVD drive unit body portion 7b can be arranged at a height not less than the lower end of the explosion-proof band 4d of the CRT 4, dissimilarly to a case where the rib portions of the disk unit body are arranged below the reinforcing band located at the lower end of the cathode ray tube. Accordingly, the DVD drive unit 7 can be so arranged as to be further close to a CRT 4 side (upper side). Thus, a distance T1 from the explosion-proof band 4d located at the lower end of the CRT 4 to the bottom surface 2b of the front cabinet 2 can be reduced, thereby enabling reduction in a height of the DVD-integrated television 1. The DVD drive unit 7 is so formed that a DVD (not shown) is placed and the disk tray 7a movable in a horizontal direction is included therein, whereby the DVD is conveyed to the DVD drive unit body portion 7b by the disk tray 7a. Thus, no conveying means having a complicated structure may be provided separately from the DVD drive unit body portion 7b in order to convey the DVD to the DVD drive unit body portion 7b. Consequently, it is possible to reduce the height of the DVD-integrated television 1 while inhibiting the number of components from increase and structure from complication.

According to this embodiment, the upper ends of the rib portions 7f of the DVD drive unit body portion 7b are arranged at a higher position than the lower end of the explosion-proof band 4d, whereby the DVD drive unit 7 is so arranged as to be further close to the CRT 4 side. Thus, the distance T1 from the explosion-proof band 4d located at the lower end of the CRT 4 to the bottom surface 2b of the front cabinet 2 can be reduced.

According to this embodiment, the front cabinet 2 and the rear cabinet 3 are respectively formed with the rail portions 2c and the rail portions 3b, the holder 5 is formed with the rail engaging portions 5a respectively engaged with the rail portions 2c of the front cabinet 2 and the rail portions 3b of the rear cabinet 3, and the rear cabinet 3 is mounted on the front cabinet 2 in a state that the rail engaging portions 5a of the holder 5 are respectively engaged with the rail portions 2c of the front cabinet 2 and the rail portions 3b of the rear cabinet 3. Thus, the rib portions 7f of the DVD drive unit 7 supported by the holder 5 can be easily arranged at the rear of the explosion-proof band 4d located at the lower end of the CRT 4, by the distance L1.

According to this embodiment, the rail portions 2c of the front cabinet 2 and the rail portions 3b of the rear cabinet 3 are formed on the bottom surface 2b of the front cabinet 2 and the bottom surface 3a of the rear cabinet 3 respectively. Thus, it is possible to reduce a height from the bottom surface 2b of the front cabinet 2 and the bottom surface 3a of the rear cabinet 3 to the holder 5, thereby enabling reduction in the height of the DVD-integrated television 1.

According to this embodiment, the explosion-proof band 4d is made of metal, and the screw mounting portions 4f for mounting the CRT 4 on the front cabinet 2 is integrally formed with the explosion-proof band 4d. Thus, the CRT 4 can be easily mounted on the front cabinet 2.

According to this embodiment, the disk tray 7a of the DVD drive unit 7 is arranged at a lower position than the rib portions 7f of the DVD drive unit 7. Thus, the disk tray 7a can be easily arranged below the explosion-proof band 4d wound around the CRT 4.

According to this embodiment, the opening 2e is formed in a corresponding region in front of the disk tray 7a, whereby the disk tray 7a is moved in the horizontal direction. Thus, the disk tray 7a can be easily exposed outside the front cabinet 2 through the opening 2e.

Although the present invention has been described and illustrated in detail, it is clearly understood that the same is by way of illustration and example only and is not to be taken by way of limitation, the spirit and scope of the present invention being limited only by the terms of the appended claims.

For example, while the upper ends of the rib portions of the DVD drive unit are arranged at a higher position than the lower end of the explosion-proof band (reinforcing band) of the CRT in the aforementioned embodiment, the present invention is not restricted to this but the upper ends of the rib portions of the DVD drive unit may be arranged at the substantially same height as the lower end of the explosion-proof band of the CRT.

While the holder supporting the DVD drive unit is mounted on the front cabinet and the rear cabinet, whereby the DVD drive unit is arranged at a prescribed position in the aforementioned embodiment, the present invention is not restricted to this but the DVD drive unit may be mounted directly on either the front cabinet or the rear cabinet or both of the front cabinet and the rear cabinet without the holder.

While the rail portions are formed on the bottom surfaces of the front cabinet and the rear cabinet respectively in the aforementioned embodiment, the present invention is not restricted to this but the rail portions may be formed on both side surfaces of the front cabinet and the rear cabinet respectively.

While the four screw mounting portions are integrally formed with the explosion-proof band (reinforcing band) of the CRT in the aforementioned embodiment, the present invention is not restricted to this but three or less screw mounting portions or five or more screw mounting portions may be integrally formed with the explosion-proof band.

## Claims

1. A disk unit-integrated display comprising:
a cathode ray tube (4) with a reinforcing band (4d) wound therearound; and
a disk unit (7) including a disk tray (7a) for placing a disk, arranged below said cathode ray tube and movable in a horizontal direction, and a disk unit body (7b) rotating a disk placed on said disk tray, wherein
said disk unit body includes a rib portion (7f) which is provided on a front side of said disk tray, protrudes upwardly and functions as a portion for locating a position in a height direction with respect to said cathode ray tube, and
said rib portion of said disk unit body is arranged at the rear of said reinforcing band located at a lower end of said cathode ray tube.

2. The disk unit-integrated display according to claim 1, wherein
an upper end of said rib portion of said disk unit body is arranged at a higher position than a lower end of said reinforcing band.

3. The disk unit-integrated display according to claim 1, further comprising:
a front side housing (2) mounted with said cathode ray tube;
a rear side housing (3) mounted with said front side housing; and
a holding member (5) supporting said disk unit, wherein
said front side housing and said rear side housing are respectively formed with rail portions (2c, 3b),
said holding member is formed to have rail engaging portions (5a) respectively engaged with said rail portions of said front side housing and said rear side housing, and
said rear side housing is mounted on said front side housing in a state that said rail engaging portions of said holding member are respectively engaged with said rail portions of said front side housing and said rear side housing so that said rib portion of said disk unit supported by said holding member is arranged at the rear of said reinforcing band located at the lower end of said cathode ray tube.

4. The disk unit-integrated display according to claim 3, wherein
said rail portions of said front side housing and said rear side housing are formed on bottom surfaces (2b, 3a) of said front side housing and said rear side housing.

5. The disk unit-integrated display according to claim 3, wherein
said reinforcing band is made of metal and is integrally formed with a mounting portion (4f) for mounting said cathode ray tube on said front side housing.

6. The disk unit-integrated display according to claim 1, wherein
said disk tray of said disk unit is arranged at a region corresponding to said reinforcing band below said reinforcing band.

7. The disk unit-integrated display according to claim 6, wherein
said disk tray of said disk unit is arranged at a lower position than said rib portion of said disk unit.

8. The disk unit-integrated display according to claim 7, further comprising:
a front side housing mounted with said cathode ray tube, wherein
said front side housing is formed with an opening (2e) at a corresponding region in front of said disk tray.

9. The disk unit-integrated display according to claim 1, further comprising:
a cover member (8) mounted on an upper surface of said disk unit body; and
a wiring board (10) mounted on an upper surface of said cover member, wherein
said wiring board is arranged at a higher position than said rib portion of said disk unit body and at the rear of said rib portion.

10. The disk unit-integrated display according to claim 1, wherein
two of said rib portions of said disk unit body are respectively provided in the vicinity of both side ends of said disk tray.

11. A disk unit-integrated display comprising:
a cathode ray tube (4) with a reinforcing band (4d) wound therearound;
a disk unit (7) including a disk tray (7a) for placing a disk, arranged below said cathode ray tube and movable in a horizontal direction, and a disk unit body (7b) rotating a disk placed on said disk tray;
a front side housing (2) mounted with said cathode ray tube;
a rear side housing (3) mounted with said front side housing; and
a holding member (5) for supporting said disk unit, wherein
said disk unit body includes a rib portion (7f) which is provided on a front side of said disk tray, protrudes upwardly and functions as a portion for locating a position in a height direction with respect to said cathode ray tube,
said front side housing and said rear side housing are respectively formed with rail portions (2c, 3b) on bottom surfaces thereof,
said holding member is formed to have rail engaging portions (5a) respectively engaged with said rail portions of said front side housing and said rear side housing,
said rear side housing is mounted on said front side housing in a state that said rail engaging portions of said holding member are respectively engaged with said rail portions of said front side housing and said rear side housing so that said rib portion of said disk unit supported by said holding member is arranged at the rear of said reinforcing band located at a lower end of said cathode ray tube,
an upper end of said rib portion of said disk unit body is arranged at a higher position than an lower end of said reinforcing band, and
said reinforcing band is made of metal and is integrally formed with a mounting portion (4f) for mounting said cathode ray tube on said front side housing.

12. The disk unit-integrated display according to claim 11, wherein
said disk tray of said disk unit is arranged at a region corresponding to said reinforcing band below said reinforcing band.

13. The disk unit-integrated display according to claim 12, wherein
said disk tray of said disk unit is arranged at a lower position than said rib portion of said disk unit.

14. The disk unit-integrated display according to claim 13, wherein
said front side housing is formed with an opening (2e) at a corresponding region in front of said disk tray.

15. The disk unit-integrated display according to claim 11, further comprising:
a cover member (8) mounted on an upper surface of said disk unit body; and
a wiring board (10) mounted on an upper surface of said cover member, wherein
said wiring board is arranged at a higher position than said rib portion of said disk unit body and at the rear of said rib portion.

16. The disk unit-integrated display according to claim 11, wherein
two of said rib portions of said disk unit body are respectively provided in the vicinity of both side ends of said disk tray.
